# EUROPEAN PATENT APPLICATION

(11) **EP 4 592 153 A1**
(43) Date of publication of application: **30.07.2025**
(21) Application number: 22959530.1
(22) Date of filing: 21.09.2022
(51) Int. Cl.: B60W 30/10, B60W 10/20, B60W 30/12

(54) **DRIVING ASSISTANCE METHOD AND DRIVING ASSISTANCE DEVICE**

(71) Applicant: NISSAN MOTOR CO., LTD., Kanagawa 221-0023 (JP)
(72) Inventor: OURA, Kazuma, Atsugi-shi, Kanagawa 243-0123 (JP); MIYAZAKI, Masahiko, Atsugi-shi, Kanagawa 243-0123 (JP)
(74) Representative: Grünecker Patent- und Rechtsanwälte PartG mbB
(86) International application number: PCT/JP2022/035219
(87) International publication number: WO 2024/062566

(57) **Abstract**

Provided are a driving assistance method and a driving assistance device (14) that: acquire a turning direction of steerable wheels of a vehicle (V); set a left threshold when a steering wheel is rotated in a left direction and a right threshold when the steering wheel is rotated in a right direction as thresholds for canceling autonomous steering control of the vehicle (V); and cancel the autonomous steering control when the absolute value of a torque input to the steering wheel exceeds the left threshold or the right threshold. The right threshold is higher than the left threshold when the turning direction is the left direction, and the left threshold is higher than the right threshold when the turning direction is the right direction.

## Description

### Technical Field

The present invention relates to a driving assistance method and a driving assistance device.

### Background Art

A steering assistance device is known that stops lane change assistance control when determining that an input value based on a steering operation of the driver exceeds an override threshold during execution of lane change assistance control (Patent Document 1). In this steering assistance device, a forward direction threshold in the direction in which the vehicle changes lanes and an opposite direction threshold in the opposite direction to the forward direction are set as override thresholds, and the magnitude of the opposite direction threshold is set smaller than the magnitude of the forward direction threshold until the end portion of the vehicle on the lane change side crosses the boundary between the original lane and the target lane.

### Prior Art Document

### Patent Document

Patent Document 1: JP6819876B

### Summary of Invention

### Problems to be solved by Invention

In the case of a system that rotates the steering wheel according to a turning angle, the force that resists the movement of rotating the steering wheel is generated in the steering system including the steering wheel. When the steering actuator controls the steerable wheels to turn, this resistance force is detected by a torque sensor as a torque in the opposite direction to the turning direction of the vehicle. Accordingly, even though the driver is not operating the steering wheel, it is recognized that a torque in the opposite direction to the turning direction of the vehicle is input from the steering wheel.

In the above conventional technique, the opposite direction threshold is set smaller than the forward direction threshold, so if the forward direction threshold is set small to allow for a smooth transition to manual driving by the driver, the absolute value of the torque due to the resistance force in the above steering system will exceed the opposite direction threshold, resulting in a problem in that the autonomous steering control will be erroneously canceled without being caused by the steering operation of the driver.

A problem to be solved by the present invention is to provide a driving assistance method and a driving assistance device that are able to suppress erroneous cancellation of autonomous steering control that is not due to the steering operation of the driver.

### Means for solving problems

The present invention solves the above problem through setting a left threshold when the steering wheel is rotated in the left direction and a right threshold when the steering wheel is rotated in the right direction as thresholds for canceling autonomous steering control of a vehicle, making the right threshold higher than the left threshold when the turning direction of steerable wheels of the vehicle is the left direction, and making the left threshold higher than the right threshold when the turning direction is the right direction.

### Effect of Invention

According to the present invention, it is possible to suppress erroneous cancellation of autonomous steering control that is not due to the steering operation of the driver.

### Brief Description of Drawings

FIG. 1 is a block diagram illustrating an example of a driving assistance system including a driving assistance device of the present invention.
FIG. 2 is a set of a plan view illustrating an example of a travel scene in which driving assistance is executed using the driving assistance system of FIG. 1 and a diagram illustrating a steering torque detected in the travel scene.
FIG. 3 is a diagram illustrating an example of resistance force generated in the steering system when the vehicle turns.
FIG. 4 is a flowchart illustrating an example of a processing procedure in the driving assistance system of FIG. 1.
FIG. 5 is a flowchart illustrating another example of a processing procedure in the driving assistance system of FIG. 1.

### Mode(s) for Carrying out the Invention

Hereinafter, one or more embodiments of the present invention will be described with reference to the drawings.

### <Configuration of Driving Assistance System>

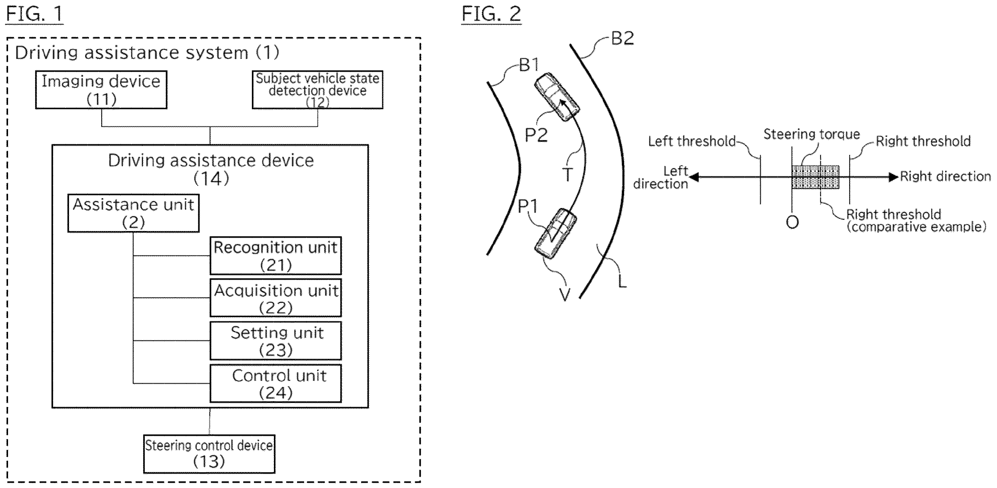

FIG. 1 is a block diagram illustrating a driving assistance system 1 according to the present invention. The driving assistance system 10 is an in-vehicle system and allows a vehicle to travel under autonomous travel control to a destination that is set by an occupant of the vehicle. The autonomous travel control refers to autonomously controlling the traveling operations of the vehicle using a driving assistance device, which will be described later. The traveling operations include all traveling operations such as acceleration, deceleration, starting, stopping, and turning to the right or left. Autonomously controlling the traveling operations means that the driving assistance device controls the traveling operations using devices of the vehicle. The driving assistance device controls these traveling operations to a certain extent that is preliminarily determined. Traveling operations that are not controlled by the driving assistance device are manually operated by the driver.

As illustrated in FIG. 1, the driving assistance system 1 includes an imaging device 11, a subject vehicle state detection device 12, a steering control device 13, and a driving assistance device 14. In addition, the driving assistance system 1 may include a ranging device, map information, a subject vehicle position detection device, a navigation device, a display device, and a speed control device, all of which are not illustrated, in order to execute autonomous traveling control. The devices constituting the driving assistance system 1 are connected via a controller area network (CAN) or other in-vehicle LAN and can exchange information with each other.

The imaging device 11 is a device that recognizes objects around the vehicle using images. The imaging device 11 may be, for example, one or more cameras such as cameras including CCDs or other imaging elements, ultrasonic cameras, and infrared cameras. Two or more imaging devices 11 can be provided in one vehicle in order to reduce blind spots when recognizing an object. For example, such imaging devices 11 may be arranged in the front grille portion of the vehicle, below the right and left door mirrors, and near the rear bumper.

Examples of objects detected by the imaging device 11 include lane boundary lines of roads, center lines, road surface signs, median strips, guardrails, curbstones, highway side walls, road signs, traffic lights, crosswalks, construction sites, accident sites, and traffic restrictions. Objects also include obstacles that may affect the travel of the vehicle, such as automobiles (other vehicles) other than the subject vehicle, motorcycles (motorbikes), bicycles, and pedestrians.

The detection results of the imaging device 11 are acquired by the driving assistance device 14 at a predetermined time interval as necessary. This predetermined time interval can be set to an appropriate value according to the processing capacity of the driving assistance device 14. In addition, the detection results of a plurality of imaging devices 11 and one or more ranging devices (not illustrated) can be integrated or synthesized in the driving assistance device 14 (sensor fusion) to complement missing information about the detected objects.

The subject vehicle state detection device 12 is a device for detecting the traveling state of the vehicle. Examples of the subject vehicle state detection device 12 include a speed sensor, an acceleration sensor, a yaw rate sensor (e.g., a gyro sensor), a steering angle sensor, and an inertial measurement unit. These devices are not particularly limited, and known devices can be used. The arrangement and number of these devices can be set as appropriate within a range in which the traveling state of the vehicle can be appropriately detected. The detection results of each device are acquired by the driving assistance device 14 at a predetermined time interval as necessary.

The steering control device 13 is an in-vehicle computer for electronically controlling the steering device, and may be, for example, an electronic control unit (ECU). Information required for the steering control by the steering control device 13, such as the traveling speed, acceleration, steering angle (rotation angle of steering wheel), and posture of the vehicle, is acquired from the subject vehicle state detection device 12. Examples of the steering device include a steering actuator (motor) that is attached to the steering column shaft and turns the steerable wheels according to the steering angle. The steering device may also be a steering actuator attached to the steering rack or pinion gear of a mechanism that turns the steerable wheels. Additionally or alternatively, the steering device may adopt a steer-by-wire scheme in which the mechanism for turning the steerable wheels and the steering wheel are mechanically separated. This scheme include both the steering actuator attached to the steering rack or pinion gear of the mechanism for turning the steerable wheels and the steering actuator attached to the column shaft of the steering.

The driving assistance device 14 is a device for controlling the devices constituting the driving assistance system 1 to cooperate with each other, thereby controlling travel of the vehicle and allowing the vehicle to travel under autonomous travel control to a set destination. The driving assistance device 14 is also a device that achieves monitoring of the traveling state of the vehicle in which the driver performs the steering operation, and execution of the steering control to suppress the lane departure of the vehicle. The steering operation refers, for example, to the driver rotating the steering wheel. The traveling state of the vehicle is a parameter detected by the subject vehicle state detection device 12, and examples thereof include the traveling speed, acceleration, lateral speed, lateral acceleration, yaw rate, and steering angle of the vehicle.

The vehicle departing from a lane means that the vehicle crosses a boundary that defines the lane and a part or all of the vehicle body is included in a range outside the lane when viewed from above. For example, when the vehicle is traveling in a lane defined by a boundary line such as a white line, if the vehicle crosses the boundary line and enters an adjacent lane, a determination is made that the vehicle departs from the lane. The boundary that defines the lane is not limited to a boundary line such as a white line, and may also be a border between a travelable area and an untravellable area. For example, boundaries that define lanes include a guard rail, a curbstone on the road shoulder, a median strip, and a border between a paved road and an unpaved road (e.g., a gravel road).

The driving assistance device 14 is, for example, a computer and includes a central processing unit (CPU) that is a processor, a read only memory (ROM) that stores programs, and a random access memory (RAM) that serves as an accessible storage device. The CPU is an operating circuit for executing the monitoring of the traveling state and the steering control by executing the programs stored in the ROM.

As for devices not illustrated, the ranging device is a device for calculating the relative distance and relative speed between the vehicle and an object, and is, for example, a radar device or sonar such as a laser radar, a millimeter-wave radar (LRF, etc.), a LiDAR (light detection and ranging) unit, or an ultrasonic radar. The map information is particularly high-definition map information, and includes road information, facility information, and their attribute information used for generating a travel route and controlling the traveling operations. The subject vehicle position detection device is a positioning system for detecting the current position of the vehicle, and is, for example, a GPS (Global Positioning System). The navigation device is a device that refers to map information to calculate a travel route from the current position of the vehicle detected by the subject vehicle position detection device to a destination that is set by an occupant. The speed control device is a device that autonomously controls the traveling speed of the vehicle through generating a signal for controlling the drive device and transmitting the signal to the drive device according to a control signal that is input from the driving assistance device 14. The display device is, for example, a liquid crystal display, and may be equipped with an input device and a speaker.

### <Functions of Functional Blocks>

The driving assistance device 14 has a monitoring function of monitoring the traveling state of the vehicle and a steering control function of executing the steering control, in addition to a driving assistance function of allowing the vehicle to travel under the autonomous travel control, and these functions are achieved by the CPU of the driving assistance device 14 executing the programs stored in the ROM. In FIG. 1, functional blocks for achieving respective functions are extracted and illustrated for descriptive purposes. The functions possessed by the functional blocks illustrated in FIG. 1, that is, an assistance unit 2, a recognition unit 21, an acquisition unit 22, a setting unit 23, and a control unit 24, will be described below.

The assistance unit 2 has a function of acquiring information from the devices constituting the driving assistance system 1, processing the acquired information, outputting instructions to the devices, and allowing the devices constituting the driving assistance system 1 to cooperate with each other to execute the autonomous travel control. FIG. 2 is a plan view illustrating an example of a travel scene in which the driving assistance device 14 executes the autonomous travel control using the driving assistance function, the monitoring using the monitoring function, and the steering control using the steering control function.

The travel scene illustrated in the diagram on the left side of FIG. 2 is a travel scene in which the vehicle V travels along a travel trajectory T from a current position P1 to a position P2 in a lane L defined by a boundary line B1 on the left side of the traveling direction of the vehicle V and a boundary line B2 on the right side of the traveling direction of the vehicle V. In this travel scene, it is assumed that normal autonomous steering control is executed by the assistance unit 2, and the vehicle V turns left by turning the steerable wheels of the vehicle V in the left direction using the steering actuator. In this case, the driving assistance device 14 executes the autonomous steering control of the present embodiment using the steering control function.

Autonomous steering control refers to autonomously controlling the steering of the vehicle V using the driving assistance device 14, and, for example, refers to controlling the rotation of the steering wheel using the steering actuator of the vehicle V, and controlling the turning of the steerable wheels using a steering actuator attached to the steering rack or pinion gear of the mechanism that turns the steerable wheels. The autonomous steering control of the present embodiment also includes lane departure suppression control that suppresses departure of the vehicle V from the lane L in which it is traveling. The lane departure suppression control is started when a determination is made that the vehicle V departs from the lane L during the monitoring of the traveling state, and the steering control function is used to execute steering control to suppress the departure of the vehicle V from the lane L.

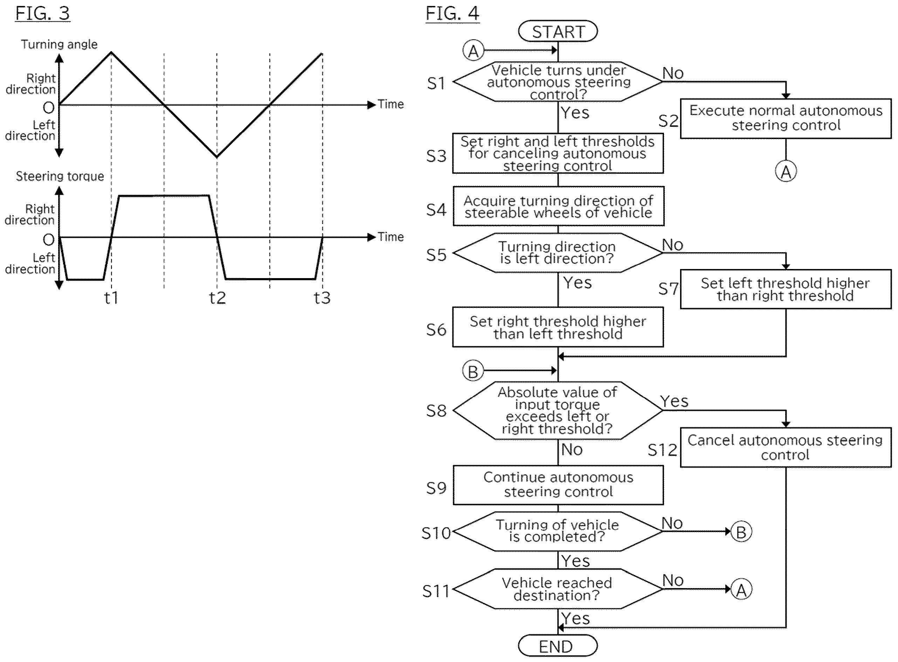

In a steering system in which the steering wheel and the steerable wheels are mechanically connected via a shaft or the like, when the vehicle V turns, a force that resists the movement of the vehicle attempting to turn is generated in the steering system. Specifically, when the steerable wheels are turned to turn the vehicle V, a force that resists the change in the movement of the steerable wheels (i.e., resistance force that rotates the steerable wheels and the steering wheel connected to the steerable wheels in the opposite direction) is generated. In a steer-by-wire steering system in which the mechanism for turning the steerable wheels is not mechanically connected to the steering wheel, a force that resists the rotation of the steering wheel is generated when the steering wheel is rotated according to the turning angle. As in the travel scene illustrated in the diagram on the left side of FIG. 2, when the vehicle V is turned under the autonomous steering control using a steering actuator, this resistance force is detected as a steering torque that rotates the steering wheel. The relationship between the resistance force and the steering torque will be described with reference to FIG. 3.

FIG. 3 is a timing diagram illustrating an example of the relationship between the turning angle and the steering torque when the vehicle V is turned under the autonomous steering control. The upper diagram of FIG. 3 illustrates the turning angle of the vehicle V turned by the steering actuator (i.e., the turning angle of the steerable wheels), while the lower diagram of FIG. 3 illustrates the steering torque detected by the torque sensor. In both diagrams, the horizontal axis represents time, and the time in the upper diagram corresponds to the time in the lower diagram. In the timing diagram illustrated in FIG. 3, when the steerable wheels are turned in the right direction, the turning angle and the steering torque take positive values, while when the steerable wheels are turned in the left direction, the turning angle and the steering torque take negative values.

In the example illustrated in FIG. 3, as illustrated in the upper diagram of FIG. 3, the steerable wheels are turned in the right direction at a constant angular velocity from when the steerable wheels start to turn until time t1, the steerable wheels are turned in the left direction at a constant angular velocity from time t1 to time t2, and the steerable wheels are turned in the right direction at a constant angular velocity from time t2 to time t3. In this case, even though the driver is not operating the steering wheel, as illustrated in the lower diagram of FIG. 3, the torque sensor detects leftward steering torque from when the steerable wheels start to turn until time t1, detects rightward steering torque from time t1 to time t2, and detects leftward steering torque from time t2 to time t3.

Referring again to FIG. 2, in the travel scene illustrated in the diagram on the left side of FIG. 2, it is assumed that when the steerable wheels are turned in the left direction for the vehicle V to travel along the travel trajectory T (i.e., when the steerable wheels are turned to the left side of the traveling direction), the steering torque illustrated in the diagram on the right side of FIG. 2 is detected. The diagram on the right side of FIG. 2 illustrates the steering torque detected by the torque sensor, and when the steering wheel is rotated in the right direction, the steering torque takes a positive value, while when the steering wheel is rotated in the left direction, the steering torque takes a negative value, with reference to the central origin.

In this case, if the magnitude of a left threshold when the steering wheel is rotated in the left direction and the magnitude of a right threshold when the steering wheel is rotated in the right direction are set to the same value as the threshold for canceling the autonomous steering control of the vehicle V, the magnitude of the detected steering torque will exceed the magnitude of the right threshold (comparative example) illustrated in the diagram on the right side of FIG. 2, and the autonomous steering control will be erroneously canceled even though the driver is not operating the steering wheel.

In this context, in the present invention, when the steerable wheels are turning in the left direction (i.e., when the turning direction of the steerable wheels is the left direction), the right threshold is set to a value higher than the left threshold, and conversely, when the steerable wheels are turning in the right direction (i.e., when the turning direction of the steerable wheels is the right direction), the left threshold is set to a value higher than the right threshold. Additionally or alternatively, provided that the rotation direction or turning direction is expressed as a positive or negative rotation angle or turning angle, when the steerable wheels are turning in the left direction, the absolute value of the right threshold is set to a value greater than the absolute value of the left threshold, and conversely, when the steerable wheels are turning in the right direction, the absolute value of the left threshold is set to a value greater than the absolute value of the right threshold.

The autonomous steering control of the present embodiment will now be described in detail. In the following description, unless otherwise specified, the rotation direction or turning direction of the steering wheel and steerable wheels is not expressed as a positive or negative threshold, and both the right and left thresholds are assumed to take positive values. The steerable wheels may also be called turnable wheels.

The recognition unit 21 has a function of recognizing the travel environment around the vehicle V. The driving assistance device 14 recognizes the travel environment around the vehicle V using the function of the recognition unit 21 with the imaging device 11. The travel environment is information for determining whether the vehicle V can maintain the current traveling state or needs to change the traveling state, and includes, for example, information such as the type and position of an object, the type and position of an obstacle if present, and road conditions. The driving assistance device 14 performs appropriate processing such as pattern matching on the detection results of the imaging device 11 to recognize the travel environment.

In the travel scene illustrated in the diagram on the left side of FIG. 2, the driving assistance device 14 performs edge extraction processing on the detection results of the imaging device 11 to recognize the boundary lines B1 and B2.

The acquisition unit 22 has a function of acquiring the turning direction of the steerable wheels of the vehicle V. The driving assistance device 14 acquires the turning direction of the steerable wheels from the detection results of the imaging device 11, the yaw rate sensor, the steering angle sensor, etc., using the function of the acquisition unit 22.

In the travel scene illustrated in the left diagram of FIG. 2, the driving assistance device 14 recognizes that the rotation direction or turning direction of the steerable wheels is leftward (i.e., the turning direction of the steerable wheels is the left direction) because the yaw rate detected by the yaw rate sensor is a negative value.

The setting unit 23 has a function of setting, as thresholds for canceling the autonomous steering control of the vehicle V, a left threshold for canceling the autonomous steering control when the steering wheel is rotated in the left direction, and a right threshold for canceling the autonomous steering control when the steering wheel is rotated in the right direction. When the turning direction acquired using the function of the acquisition unit 22 is the left direction, the driving assistance device 14 of the present embodiment uses the function of the setting unit 23 to set the right threshold higher than the left threshold. On the other hand, when the turning direction acquired is the right direction, the driving assistance device 14 sets the left threshold higher than the right threshold. For example, when the rotation direction or turning direction is the left direction, the driving assistance device 14 sets the right threshold to a value obtained by multiplying the left threshold by a predetermined coefficient (e.g., 1.5 to 3), and when the rotation direction or turning direction is the right direction, the driving assistance device 14 sets the left threshold to a value obtained by adding a predetermined value (e.g., 0.5 to 2 Nm).

In the travel scene illustrated in the diagram on the left side of FIG. 2, the rotation direction or turning direction of the steerable wheels is leftward (i.e., the turning direction of the steerable wheels is the left direction), so the driving assistance device 14 sets the right threshold, for example, to a value twice the left threshold.

The control unit 24 has a function of canceling the autonomous steering control when the absolute value of the torque input to the steering wheel exceeds the left threshold or the right threshold. The driving assistance device 14 determines whether or not the absolute value of the torque input to the steering wheel exceeds the left threshold or the right threshold and continues the autonomous steering control when the absolute value of the torque does not exceed the left threshold or the right threshold, using the function of the control unit 24. In contrast, when the absolute value of the torque exceeds the left threshold or the right threshold, the autonomous steering control is canceled and transitions to the manual driving by the driver.

The driving assistance device 14 may operate the steering actuator via the steering control device 13 and turn the steerable wheels in the left or right direction to adjust the steering angle. In the case of a steer-by-wire system in which the mechanism for turning the steerable wheels is mechanically separated from the steering wheel, the driving assistance device 14 can adjust one or both of the turning angle of the steering actuator attached to the steering rack or pinion gear of the mechanism for turning the steerable wheels and the steering angle of the steering actuator attached to the steering column shaft. The cancellation of the autonomous steering control refers to suspending or terminating the execution of the autonomous steering control by the driving assistance device 14. The manual driving means that the driving assistance device 14 does not perform the autonomous driving control of the traveling operations, and the travel of the vehicle is controlled by the operation of the driver.

In the travel scene illustrated in the left diagram of FIG. 2, the steering torque detected by the torque sensor does not exceed the right threshold, so the driving assistance device 14 continues the autonomous steering control and allows the vehicle to travel from the current position P1 to the position P2.

The driving assistance device 14 of the present embodiment may use the function of the acquisition unit 22 to determine whether or the vehicle V turns under the autonomous steering control and acquire the turning direction of the steerable wheels when determining that the vehicle V turns under the autonomous steering control. In this case, when the turning direction is the left direction, the driving assistance device 14 sets the right threshold higher than the left threshold, while when the turning direction is the right direction, the driving assistance device 14 sets the left threshold higher than the right threshold. For example, the driving assistance device 14 acquires the turning direction of the steerable wheels and sets, before the autonomous steering control starts, the left and right thresholds according to the turning direction. Then, the driving assistance device 14 determines the end of the turning of the vehicle V and maintains the left and right thresholds until a determination is made that the turning ends. This can suppress the occurrence of threshold switching during the turning of the vehicle V and avoid the autonomous steering control being canceled at a timing not intended by the driver.

The autonomous steering control of the present embodiment may be performed in combination with monitoring using the monitoring function of the driving assistance device 14. For example, when the vehicle V is traveling by the steering operation of the driver, the driving assistance device 14 may use the function of the control unit 24 to determine whether or not the vehicle V departs from the lane L in which it is traveling, and when determining that the vehicle V departs from the lane L in which it is traveling, the driving assistance device 14 may start lane departure suppression control to suppress the departure of the vehicle V from the lane L, instead of the steering operation of the driver. In contrast, when determining that the vehicle V does not depart from the lane L in which it is traveling, the driving assistance device 14 allows the driver to continue the steering operation without starting the lane departure suppression control.

When determining whether or not the vehicle V departs from the lane L, the driving assistance device 14 acquires, for example, the traveling direction of the vehicle V and determines whether or not the vehicle V departs from the lane L by crossing the boundary that defines the lane L when the vehicle V continues to travel along the traveling direction. The traveling direction of the vehicle V is recognized from the yaw rate acquired from the yaw rate sensor, the steering angle acquired from the steering angle sensor, etc.

As an example of a method of determining the departure of the vehicle V, the driving assistance device 14 detects a boundary of the lane L in which the vehicle V is traveling, and recognizes the positional relationship between the boundary and the vehicle V (e.g., the distance between the vehicle V and the boundary). Then, the driving assistance device 14 determines whether or not the vehicle V crosses the boundary that defines the lane L when the vehicle V travels while maintaining the yaw angle with respect to the boundary. The driving assistance device 14 calculates, for example, a relative-to-lane yaw angle that is an angle between the traveling direction of the vehicle V and a tangent direction of the lane L at a position on the lane L at which the vehicle V is traveling. In addition, the driving assistance device 14 calculates the distance in the width direction between the vehicle V and the boundary line B1. Then, the driving assistance device 14 predicts the departure of the vehicle V from the relative-to-lane yaw angle and the distance in the width direction. As an example, when the relative-to-lane yaw angle is within a range in which the vehicle V can travel along the lane L, and the distance between the vehicle V and the boundary line B1 is long (i.e., the vehicle V is away from the boundary line B1), the driving assistance device 14 predicts that the vehicle V will not depart from the lane L. On the other hand, when the relative-to-lane yaw angle of the vehicle V is larger or smaller than the range in which the vehicle V can travel along the lane L (i.e., when the steering angle is too large or too small for the required relative-to-lane yaw angle), when the distance between the vehicle V and the boundary line B1 is short (i.e., when the vehicle V and the boundary line B1 are close to each other), etc., the driving assistance device 14 predicts that the vehicle V will depart from the lane L. It is assumed that the tangent to the boundary line B1 is, for example, the tangent at a point on the boundary line B1 that is closest to the body of the vehicle V.

When starting the lane departure suppression control in place of the steering operation of the driver, the driving assistance device 14 of the present embodiment acquires the departure direction in which the vehicle V departs from the lane L. The departure direction of the vehicle V refers to a direction in which the vehicle V heads if it departs from the lane L in which it is traveling, and indicates whether the vehicle V departs to the right or left of the traveling direction. In other words, the departure direction indicates whether the vehicle V crosses the boundary on the right side of the traveling direction or the boundary on the left side of the traveling direction among the boundaries that define the lane L when it is predicted that the vehicle V will depart from the lane L in which it is traveling. When the departure direction is the left direction, the vehicle V departs from the lane L by crossing the boundary on the left side of the traveling direction, while when the departure direction is the right direction, the vehicle V departs from the lane L by crossing the boundary on the right side of the traveling direction.

The driving assistance device 14 acquires the departure direction in which the vehicle V departs from the lane L from the information on the traveling direction of the vehicle V used when predicting the departure of the vehicle V from the lane L. For example, upon prediction that the vehicle V will depart from the lane L, when the traveling direction of the vehicle V is to the left front or to the left side of the vehicle V, the departure direction is the left direction, while when the traveling direction of the vehicle V is to the right front or to the right side of the vehicle V, the departure direction is the right direction.

In addition, when the direction in which the vehicle V departs from the lane L is to the left with respect to the traveling direction of the vehicle V, the driving assistance device 14 sets the left threshold higher than the right threshold. This is because when the vehicle V departs to the left with respect to the traveling direction, the steerable wheels are turned to the right. On the other hand, when the direction in which the vehicle V departs from the lane L is to the right with respect to the traveling direction of the vehicle V, the driving assistance device 14 sets the right threshold higher than the left threshold. This is because when the vehicle V departs to the right with respect to the traveling direction, the steerable wheels are turned to the left.

For example, in the travel scene illustrated in the diagram on the left side of FIG. 2, if the steering wheel operation of the driver is delayed and a determination is made that the vehicle V departs from the lane L to the right of the traveling direction, the driving assistance device 14 recognizes that the vehicle V departs to the right of the traveling direction from the traveling direction of the vehicle V, and sets the right threshold to a value 1.5 times the left threshold. Thus, by setting the right and left thresholds according to the direction in which the vehicle V departs, it is possible to set a threshold for canceling the autonomous steering control (lane departure suppression control) without acquiring the rotation direction of the steering wheel.

The step of determining whether or not the vehicle V departs from the lane L, the step of starting the lane departure suppression control that suppresses departure of the vehicle V from the lane L, and the step of acquiring the departure direction in which the vehicle V departs from the lane L are not essential features of the present invention and may be provided as necessary. Likewise, the step of setting the right and left thresholds according to the departure direction is not an essential feature of the present invention, and may be provided as necessary.

Furthermore, the driving assistance device 14 may set the difference between the right and left thresholds to a higher value as the rotation speed of the steering wheel becomes faster. This is because the resistance force generated in the steering system increases as the rate of change of the steering angle increases. The step of setting the right and left thresholds according to the rotation speed of the steering wheel is not an essential feature of the present invention, and may be added or omitted as necessary.

### <Processing in Driving Assistance System>

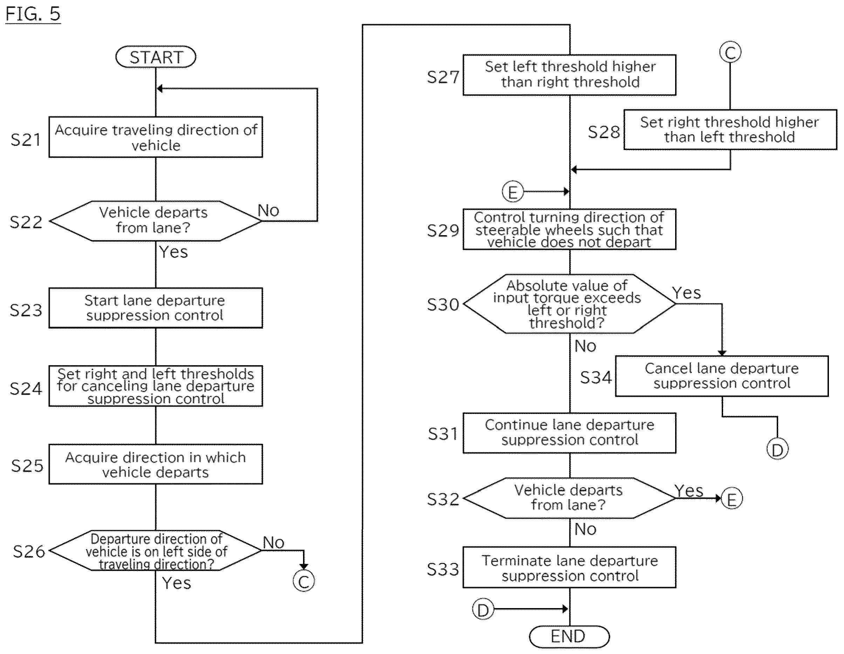

With reference to FIGS. 4 and 5, the procedure when the driving assistance device 14 processes information will be described. FIG. 4 is an example of a flowchart illustrating the processing of information executed in the driving assistance system 1 of the present embodiment. It is assumed that the travel scene in which the processing of FIG. 4 is performed is a travel scene in which the vehicle V is traveling in the lane L under the autonomous steering control. The processing described below is executed at a predetermined time interval by the CPU, which is the processor of the driving assistance device 14.

First, in step S1, the function of the acquisition unit 22 is used to determine whether or not the vehicle V turns under the autonomous steering control. When a determination is made that the vehicle V does not turn under the autonomous steering control, the process proceeds to step S2, in which the normal autonomous steering control is executed using the function of the assistance unit 2, and the process proceeds to step S1. In contrast, when a determination is made that the vehicle V turns under the autonomous steering control, the process proceeds to step S3, in which the function of the setting unit 23 is used to set the right and left thresholds as thresholds for canceling the autonomous steering control. In the subsequent step S4, the function of the acquisition unit 22 is used to acquire the turning direction of the steerable wheels of the vehicle V, and in step S5, the function of the control unit 24 is used to determine whether or not the turning direction is the left direction. When the turning direction is the left direction, the process proceeds to step S6, in which the right threshold is set higher than the left threshold, while when the turning direction is the right direction, the process proceeds to step S7, in which the left threshold is set higher than the right threshold.

In step S8, a determination is made whether the absolute value of the input steering torque exceeds the left or right threshold. When a determination is made that the absolute value of the input steering torque does not exceed the left or right threshold, the process proceeds to step S9, in which the autonomous steering control continues. In the subsequent step S10, a determination is made whether or not the steering of the vehicle V has been completed, and when a determination is made that the steering of the vehicle V has not been completed, the process proceeds to step S8. In contrast, when a determination is made that the steering of the vehicle V has been completed, the process proceeds to step S11, in which a determination is made whether or not the vehicle V has reached the destination. When a determination is made that the vehicle V has reached the destination, the execution of the routine is terminated and the process transitions to manual driving by the driver. In contrast, when a determination is made that the vehicle V has not reached the destination, the process proceeds to step S1.

On the other hand, when a determination is made in step S8 that the absolute value of the input steering torque exceeds the left or right threshold, the process proceeds to step S12, in which the autonomous steering control is canceled and the process transitions to manual driving by the driver. Steps S1, S2, S10, and S11 are not essential steps for the present invention, and may be added or omitted as necessary.

Next, FIG. 5 is another example of a flowchart illustrating information processing executed in the driving assistance system 1 of the present embodiment. The travel scene in which the processing of FIG. 5 is performed is a travel scene in which the vehicle V is allowed to travel by the steering operation of the driver in a state in which the monitoring of the traveling state of the vehicle V is being executed using the monitoring function of the driving assistance device 14. The processing described below is executed at a predetermined time interval by the CPU, which is the processor of the driving assistance device 14.

First, in step S21, the function of the acquisition unit 22 is used to acquire the traveling direction of the vehicle V, and in the subsequent step S22, the function of the control unit 24 is used to determine whether or not the vehicle V departs from the lane L. When a determination is made in step S22 that the vehicle V does not depart from the lane L, the process proceeds to step S21, in which monitoring of the traveling state is continued. In contrast, when a determination is made that the vehicle V departs from the lane L, the process proceeds to step S23.

In step S23, the function of the control unit 24 is used to start the lane departure suppression control. In step S24, the function of the setting unit 23 is used to set the right and left thresholds for canceling the autonomous steering control (lane departure suppression control), and in the subsequent step S25, the function of the acquisition unit 22 is used to acquire the direction in which the vehicle V departs. In step S26, the function of the control unit 24 is used to determine whether or not the direction in which the vehicle V departs is on the left side of the traveling direction. When the direction in which the vehicle V departs is on the left side of the traveling direction, the process proceeds to step S27, in which the left threshold is set higher than the right threshold. In contrast, when the direction in which the vehicle V departs is on the right side of the traveling direction, the process proceeds to step S28, in which the right threshold is set higher than the left threshold.

In step S29, the turning direction of the steerable wheels is controlled using the steering actuator so that the vehicle V does not depart from the lane L, and in the subsequent step S30, a determination is made whether or not the absolute value of the input steering torque exceeds the left or right threshold. When a determination is made that the absolute value of the input steering torque does not exceed the left or right threshold, the process proceeds to step S31, in which autonomous steering control (lane departure suppression control) continues. In the subsequent step S32, a determination is made whether or not the vehicle V departs from the lane L. When a determination is made that the vehicle V departs from the lane L, the process proceeds to step S29. In contrast, when a determination is made that the vehicle V does not depart from the lane L, the process proceeds to step S33, in which the lane departure suppression control is terminated and monitoring of the driving condition continues.

On the other hand, when a determination is made in step S30 that the absolute value of the input steering torque exceeds the left or right threshold, the process proceeds to step S34, in which the autonomous steering control (lane departure suppression control) is canceled. After that, execution of the routine is terminated, and the process transitions to travel by the steering operation of the driver while continuing the monitoring of the driving condition.

### <Embodiments of Present Invention>

As described above, according to the present embodiment, a driving assistance method executed by a processor is provided, the processor operating to: acquire a turning direction of steerable wheels of the vehicle V; set a left threshold when a steering wheel is rotated in a left direction and a right threshold when the steering wheel is rotated in a right direction as thresholds for canceling autonomous steering control of the vehicle; and cancel the autonomous steering control when the absolute value of a torque input to the steering wheel exceeds the left threshold or the right threshold. The right threshold is higher than the left threshold when the turning direction is the left direction, and the left threshold is higher than the right threshold when the turning direction is the right direction. This enables a smooth transition to manual driving by the driver while suppressing erroneous cancellation of the autonomous steering control that is not due to the steering operation of the driver.

Additionally or alternatively, according to the driving assistance method of the present embodiment, the processor operates to: determine whether or not the vehicle V turns under the autonomous steering control; when determining that the vehicle V turns under the autonomous steering control, acquire the turning direction; when the turning direction is the left direction, set the right threshold higher than the left threshold; and when the turning direction is the right direction, set the left threshold higher than the right threshold. This can suppress frequent switching of the turning direction during the autonomous steering control, and avoid cancellation of the autonomous steering control at a timing not intended by the driver.

Additionally or alternatively, according to the driving assistance method of the present embodiment, the processor operates to: determine whether or not the vehicle V traveling by the steering operation of the driver departs from the lane L in which the vehicle is traveling; when determining that the vehicle V departs from the lane L, acquire the direction in which the vehicle V departs from the lane L; when the vehicle V departs leftward with respect the traveling direction, set the left threshold higher than the right threshold; and when the vehicle V departs rightward with respect to the traveling direction, set the right threshold higher than the left threshold. This allows the threshold for canceling the autonomous steering control to be sed without acquiring the rotation direction of the steering wheel, thus simplifying the processing in the driving assistance device 14.

Additionally or alternatively, according to the driving assistance method of the present embodiment, the processor operates to set the difference between the right threshold and the left threshold to a higher value as the rotation speed of the steering wheel becomes faster. This allows the threshold value to be set according to the rate of change of the steering angle.

Additionally or alternatively, according to the present embodiment, a driving assistance device 14 is provided, comprising: an acquisition unit 22 configured to acquire a turning direction of steerable wheels of a vehicle V; a setting unit 23 configured to set a left threshold when a steering wheel is rotated in a left direction and a right threshold when the steering wheel is rotated in a right direction as thresholds for canceling autonomous steering control of the vehicle V; and a control unit 24 configured to cancel the autonomous steering control when the absolute value of a torque input to the steering wheel exceeds the left threshold or the right threshold. The right threshold is higher than the left threshold when the turning direction is the left direction, and the left threshold is higher than the right threshold when the turning direction is the right direction. This enables a smooth transition to manual driving by the driver while suppressing erroneous cancellation of the autonomous steering control that is not due to the steering operation of the driver.

### Description of Reference Numerals

### 1... Driving assistance system

11... Imaging device, 12... Subject vehicle state detection device, 13... Steering control device, 14... Driving assistance device

### 2... Assistance unit

21... Recognition unit, 22... Acquisition unit, 23... Setting unit, 24... Control unit B1, B2... Boundary line, L... Lane, P1... Current position, P2... Position, T... Travel trajectory, V...Vehicle

## Claims

1. A driving assistance method executed by a processor, the processor operating to:
acquire a turning direction of steerable wheels of a vehicle;
set a left threshold when a steering wheel is rotated in a left direction and a right threshold when the steering wheel is rotated in a right direction as thresholds for canceling autonomous steering control of the vehicle; and
cancel the autonomous steering control when an absolute value of a torque input to the steering wheel exceeds the left threshold or the right threshold,
the right threshold being higher than the left threshold when the turning direction is the left direction,
the left threshold being higher than the right threshold when the turning direction is the right direction.

2. The driving assistance method according to claim 1, wherein the processor operates to:
determine whether or not the vehicle turns under the autonomous steering control;
when determining that the vehicle turns under the autonomous steering control, acquire the turning direction;
when the turning direction is the left direction, set the right threshold higher than the left threshold; and
when the turning direction is the right direction, set the left threshold higher than the right threshold.

3. The driving assistance method according to claim 1 or 2, wherein the processor operates to:
determine whether or not the vehicle traveling by a steering operation of a driver departs from a lane in which the vehicle is traveling;
when determining that the vehicle departs from the lane, acquire a direction in which the vehicle departs from the lane;
when the vehicle departs leftward with respect a traveling direction, set the left threshold higher than the right threshold; and
when the vehicle departs rightward with respect to the traveling direction, set the right threshold higher than the left threshold.

4. The driving assistance method according to claim 1 or 2, wherein the processor operates to set a difference between the right threshold and the left threshold to a higher value as a rotation speed of the steering wheel becomes faster.

5. A driving assistance device comprising:
an acquisition unit configured to acquire a turning direction of steerable wheels of a vehicle;
a setting unit configured to set a left threshold when a steering wheel is rotated in a left direction and a right threshold when the steering wheel is rotated in a right direction as thresholds for canceling autonomous steering control of the vehicle; and
a control unit configured to cancel the autonomous steering control when an absolute value of a torque input to the steering wheel exceeds the left threshold or the right threshold,
the right threshold being higher than the left threshold when the turning direction is the left direction,
the left threshold being higher than the right threshold when the turning direction is the right direction.
